# EUROPEAN PATENT APPLICATION

(11) **EP 4 734 193 A1**
(43) Date of publication of application: **29.04.2026**
(21) Application number: 25176241.5
(22) Date of filing: 14.05.2025
(51) Int. Cl.: H01M 8/026

(54) **GAS DISTRIBUTING PLATE ASSEMBLY FOR FUEL CELLS OR ELECTROLYZERS AND CELL STACK AND FUEL CELL SYSTEM INCLUDING THE SAME**

(30) Priority: 24.10.2024 KR 20240146351
(71) Applicant: FCI Co., Ltd., Daejeon 34036 (KR)
(72) Inventor: RYU, Bo Hyun, 34061 Daejeon (KR); PARK, Sang Pil, 34022 Daejeon (KR); JUNG, Kyu Suk, 34031 Daejeon (KR)
(74) Representative: Isarpatent

(57) **Abstract**

Disclosed are a gas distributing plate assembly for fuel cells or electrolyzers that generates a flow of gas introduced into a cell structure as a vertical and horizontal flow to uniformly distribute gas and heat throughout the cell structure so as to prevent the gas from being concentrated in a specific area and increase reaction efficiency due to reduction in damage caused by heat concentration, a cell stack formed by stacking a plurality of cell packages including the gas distributing plate assembly, and a fuel cell system including the cell stack.

## Description

### BACKGROUND OF THE INVENTION

### Field of the Invention

The present invention relates to a gas distributing plate assembly for fuel cells or electrolyzers, and a cell stack and a fuel cell system including the same, and more particularly to a gas distributing plate assembly capable of uniformly distributing a flow of gas throughout a cell structure to prevent concentration of the gas in a specific area of the cell structure and avoiding heat concentration in the cell structure and a separator due to a uniform electrochemical reaction to reduce damage to the cell structure and the separator, and a cell stack and a fuel cell system including the same.

### Description of the Related Art

A solid oxide fuel cell (SOFC) is a fuel cell that is operated at a high temperature of 700 °C to 1000 °C using solid ceramic as an electrolyte, and has an advantage of having relatively high-power generation efficiency and being capable of utilizing a high-quality arrangement compared to other types of fuel cells.

In general, solid oxide fuel cells use a cell stack in which a plurality of cell packages is stacked, and each cell package has a cathode and an anode disposed on both surfaces of an electrolyte.

When oxygen and hydrogen are supplied to the cathode and the anode of the cell package, oxygen ions are generated at the cathode due to a reduction reaction of oxygen, and the generated oxygen ions move to the anode via an electrolyte membrane.

At the anode, the oxygen ions having moved from the cathode react with the hydrogen supplied to the anode to produce water. At this time, electrons generated at the anode flow to an external circuit in the process of moving to the cathode, and electricity is produced using this flow of the electrons.

The cell package of the solid oxide fuel cell includes a cell structure including the cathode, the anode, and the electrolyte, and members, such as separators that guide oxygen gas (or air) and hydrogen gas to the cathode and the anode of the cell structure, a sealant that seals between the cell structure and the separators, and current collectors for transmitting the produced electricity to the outside.

The separators of the cell package may have microchannels formed on at least one surface thereof. The microchannels of the separators serve to guide reaction gases, which are hydrogen and oxygen, to be supplied uniformly to the respective reaction surfaces of the cell structure.

If a flow in the microchannels formed in the separator is not smooth and the gas is concentrated in a specific area of the cathode or the anode, a reaction occurs only in that specific area. When heat is concentrated in the specific area due to this, it is disadvantageous for the solid oxide fuel cell to be operated for a long period of time, and the overall electricity production efficiency is bound to decrease.

Particularly, since the microchannels of separators frequently used conventionally are simply formed in a straight line shape, the inlet pressure of the separator tends not to be maintained evenly to the outlet of the separator via the middle of the separator. Therefore, due to the difference in reaction between an area where a fluid is introduced and an area where the fluid is not introduced, a temperature difference occurs in the cell structure, and eventually a temperature difference occurs in the separators and a cell stack. In addition, the above-mentioned members may be damaged due to heat isolation caused by such a temperature difference, and the cell package or the cell stack may not be able to exhibit the best efficiency due to regional imbalances in reaction rate.

In order to overcome the shape limitations of the conventional separators, Korean Patent Publication No. 10-2010-0051257 (hereinafter referred to as "related art document") was proposed. The related art document discloses a fuel cell separator with a pattern in which a zigzag structure is repeated.

However, when microchannels are formed in a zigzag structure, gas must change direction several times during a process of being supplied to a cell structure, and thus, a resistance to the flow of a fluid increases at a point where the direction changes. This causes pressure loss in the middle of the flow, so the flow of the fluid may become slower toward an outlet compared to an inlet. Such nonuniform flow of the fluid ultimately hinders the maximum increase in power generation efficiency.

### RELATED ART DOCUMENTS

### PATENT DOCUMENTS

Korean Patent Publication No. 10-2010-0051257 (Publication Date: May 17, 2010)

### SUMMARY OF THE INVENTION

Therefore, the present invention has been made in view of the above problems, and it is an object of the present invention to provide a gas distributing plate assembly capable of preventing fuel and air from being concentrated in a specific area of a cell structure and reducing heat loss due to heat concentration in a cell, a separator, and a stack through a uniform reaction, and a fuel cell and a fuel cell system including the same.

In accordance with an aspect of the present invention, the above and other objects may be accomplished by the provision of a gas distributing plate assembly for fuel cells or electrolyzers including a contact plate having a plurality of gas passage holes formed in each of a first side rim and a second side rim, and a plurality of slits formed parallel to each other in a direction from the first side rim to the second side rim in a body, and configured such that an edge of a cell structure is in close contact with at least a portion of the body, and a gas flow plate configured to be in close contact with a surface of the contact plate opposite the other surface configured such that the cell structure is in close contact therewith, and having a gas inlet and a gas passage hole formed in a third side rim having a shape corresponding to the first side rim, a gas outlet and a gas passage hole formed in a fourth side rim having a shape corresponding to the second side rim, and a comb-shaped inflow channel configured to communicate with the gas inlet, unit diffusion channels including horizontal channels formed as horizontal grooves and vertical grooves, and a comb-shaped discharge channel configured to communicate with the gas outlet, the inflow channel, the unit diffusion channels, and the discharge channel being formed in a body.

In accordance with another aspect of the present invention, there is provided a cell stack of a fuel cell or an electrolyzer configured such that a plurality of cell packages is stacked, each of the plurality of cell packages including the gas distributing plate assembly provided on an anode side, the gas distributing plate assembly provided on a cathode side, a cell structure having an anode in close contact with the anode-side gas distributing plate assembly and a cathode in close contact with the cathode-side gas distributing plate assembly, a sealant disposed between the anode-side gas distributing plate assembly and the cathode-side gas distributing plate assembly to prevent gas leakage, and a separator configured to seal an exposed outer surface of the gas flow plate provided in the anode-side gas distributing plate assembly or the cathode-side gas distributing plate assembly.

In accordance with a further aspect of the present invention, there is provided a fuel cell system or an electrolyzer system including the cell.

The body of the contact plate may be provided with unit slits formed as a plurality of slits and provided in multiple stages.

Among the plurality of unit slits, a height of unit slits adjacent to the first side rim and the second side rim may be greater than a height of other unit slits not adjacent to the first side rim and the second side rim.

The unit diffusion channels of the gas flow plate may be disposed at positions corresponding to boundaries between the unit slits of the contact plate, and the horizontal channels of the unit diffusion channels of the gas flow plate may be disposed at positions corresponding to horizontal lines between upper and lower ends of the unit slits.

The horizontal channels and the vertical grooves of the unit diffusion channels of the gas flow plate may be alternately disposed without communicating with each other.

In the anode-side gas distributing plate assembly, a first fuel passage hole and a first air passage hole may be formed in the first side rim of the contact plate, a second fuel passage hole may be formed at a position diagonally opposite the first fuel passage hole in the second side rim of the contact plate, a second air passage hole may be formed at a position diagonally opposite the first air passage hole in the second side rim of the contact plate, a fuel inlet and a third air passage hole may be formed at positions corresponding to the first fuel passage hole and the first air passage hole in the third side rim of the gas flow plate, and a fuel outlet and a fourth air passage hole may be formed at positions corresponding to the second fuel passage hole and the second air passage hole in the fourth side rim of the gas flow plate.

Fuel gas may be injected into the fuel inlet of the anode-side gas distributing plate assembly and then be discharged through the fuel outlet located diagonally from the fuel inlet in the anode-side gas distributing plate assembly, and air may be injected into the gas inlet of the cathode-side gas distributing plate assembly and then be discharged through the gas outlet located diagonally from the gas inlet in the cathode-side gas distributing plate assembly.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view showing the configuration of an anode-side (or cathode-side) gas distributing plate assembly according to one embodiment of the present invention;
FIG. 2 is a view showing the configuration of a cell package including gas distributing plate assemblies according to one embodiment of the present invention;
FIG. 3 is a view showing the detailed configuration of a gas flow plate and a contact plate constituting the gas distributing plate assembly according to one embodiment of the present invention;
FIG. 4 is a view showing a detailed configuration for explaining the gas distribution principle of the gas distributing plate assembly according to one embodiment of the present invention;
FIG. 5 is a view showing the configuration of a contact plate of a gas distributing plate assembly according to another embodiment of the present invention; and
FIG. 6 is a cutaway view of a cell package according to one embodiment of the present invention.

### DETAILED DESCRIPTION OF THE INVENTION

Hereinafter, several embodiments of the present invention will be described in detail with reference to the accompanying drawings. However, this is not intended to limit the present invention to a specific embodiment, and it should be understood that all transformations, equivalents, and substitutions within the technical idea of the present invention are included in the spirit and scope of the present invention.

In the following description, singular expressions include plural expressions, unless the context clearly indicates otherwise.

In the following description, when it is described that a certain component "has" or "comprises" a certain component, it does not exclude other components, and may further include other components, unless the context clearly indicates otherwise.

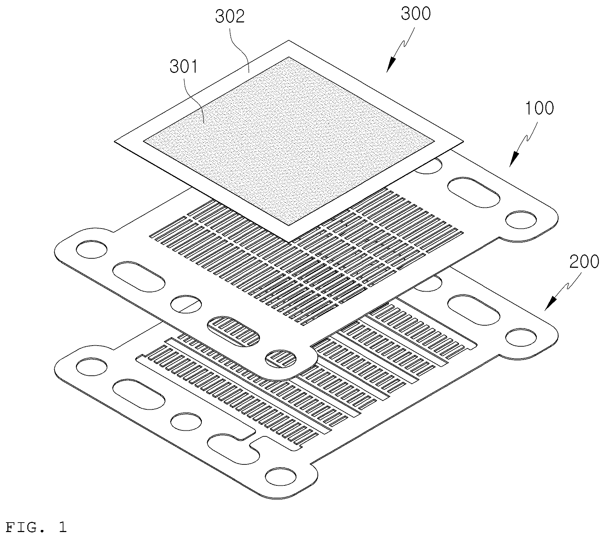

FIG. 1 is a view showing the configuration of an anode-side (or cathode-side) gas distributing plate assembly according to one embodiment of the present invention.

The gas distributing plate assembly according to one embodiment includes a contact plate 100 and a gas flow plate 200. The gas distributing plate assembly according to one embodiment refers to one of an anode-side gas distributing plate assembly that is in close contact with an anode of a cell structure 300 and a cathode-side gas distributing plate assembly that is in close contact with a cathode of the cell structure 300.

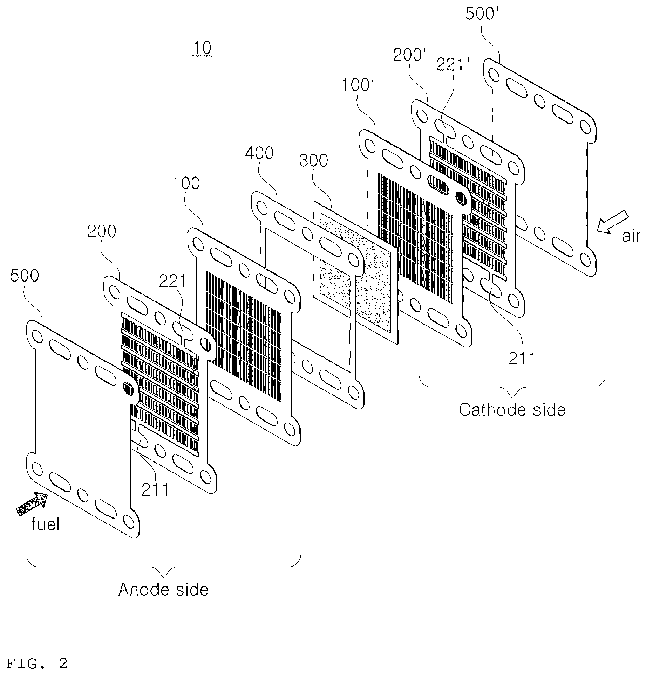

FIG. 2 is a view showing the configuration a cell package including gas distributing plate assemblies according to the embodiment of FIG. 1.

As shown in FIG. 2, a cell package 10 of one embodiment includes an anode-side gas distributing plate assembly, the cell structure 300, a sealant 400, a cathode-side gas distributing plate assembly, and separators 500 and 500'.

As shown in FIG. 2, the anode-side gas distributing plate assembly and the cathode-side gas distributing plate assembly are arranged to mirror each other with respect to the cell structure 300 located at the center, except that a gas inlet 211 or 211' and a gas outlet 221 or 221' of each gas distributing plate assembly are disposed at points where the left and right sides thereof are switched with respect to a vertical central axis. That is, the anode-side gas distributing plate assembly and the cathode-side gas distributing plate assembly have the same technical configuration except for the positions of the gas inlets 211 and 211' and the gas outlets 221 and 221'.

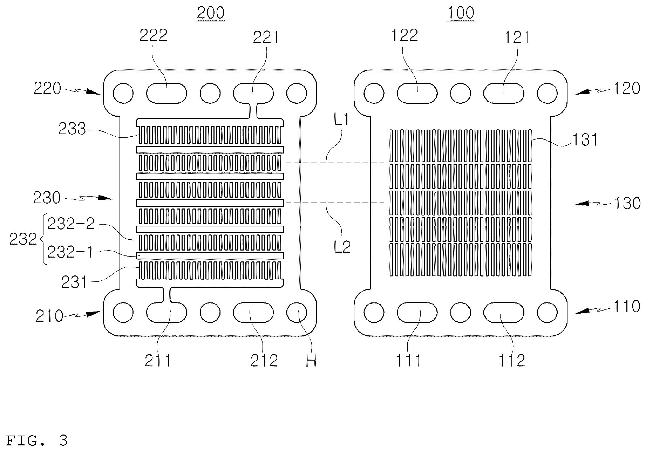

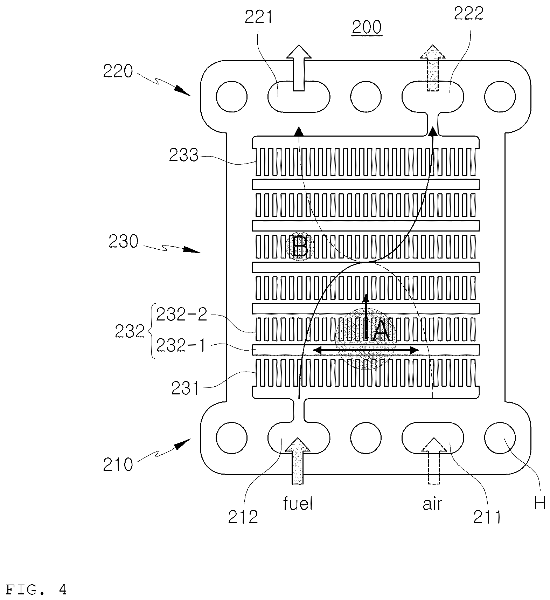

The gas distributing plate assembly will be described in detail later with reference to FIGs. 3 and 4.

The cell structure 300 is a reaction unit including a cathode, an electrolyte, and an anode, and is divided into a reaction region 301 disposed in a central portion of the cell structure 300 and a non-reaction region 302 disposed in an edge portion of the cell structure 300.

As shown in FIG. 2, the contact plate 100 of the anode-side gas distributing plate assembly is in close contact with the anode of the cell structure 300, and the contact plate 100' of the cathode-side gas distributing plate assembly is in close contact with the cathode of the cell structure 300.

The sealant 400 is disposed between the anode-side gas distributing plate assembly and the cathode-side gas distributing plate assembly to prevent gas leakage. That is, the sealant 400 keeps the cell structure 300 airtight so that fuel and oxygen are not mixed in advance before passing through the cell structure 300. In addition, the sealant 400 may serve as an insulator so that electricity produced by the cell structure 300 does not leak through an unnecessary channel.

Specifically, the sealant 400 includes a body provided with a cell structure mounting hole having a shape the same as or slightly larger than the outer diameter of the cell structure 300, and a fifth side rim and a sixth side rim having shapes corresponding to a first side rim 110 and a second side rim 120 of each of the contact plates 100 and 100' of the gas distributing plate assemblies. Accordingly, various gas passage holes and alignment holes are formed in the fifth side rim and sixth side rim at the same positions and with the same shapes as various gas passage holes and alignment holes formed in the first side rim 110 and the second side rim 120 of each of the contact plates 100 and 100'. In addition, the sealant 400 may be formed with the same or almost the same thickness as the cell structure 300.

The separators 500 and 500' seal the exposed outer surfaces of the gas flow plates 200 and 200' provided in the anode-side gas distributing plate assembly and the cathode-side gas distributing plate assembly.

Specifically, each of the separators 500 and 500' includes a plate-shaped body having a uniform thickness and a flat surface, and a seventh side rim and an eighth side rim having shapes corresponding to the first side rim 110 and the second side rim 120 provided in each of the contact plates 100 and 100' of the gas distributing plate assemblies. Accordingly, various gas passage holes and alignment holes are formed in the seventh side rim and eighth side rim at the same positions and with the same shapes as the various gas passage holes and alignment holes formed in the first side rim 110 and the second side rim 120 of each of the contact plates 100 and 100'.

As described above, the separator 500, the anode-side gas distributing plate assembly, the cell structure 300, the sealant 400, the cathode-side gas distributing plate assembly, and the separator 500' are sequentially stacked and in close contact with form one cell package 10.

If a plurality of cell packages is stacked to form a cell stack, the above-described cell package 10 having the two separators 500 and 500' may be used as the cell package disposed at the outermost end of the cell stack, but a cell package having one separator may be sufficient as the cell package disposed in the middle of the cell stack.

In other words, a single cell package 10 may be used or a cell stack in which a plurality of cell packages 10 is stacked may be used in a fuel cell system.

However, in any case, fuel gas is injected into the gas inlet (also referred to as fuel inlet) 211 of the gas flow plate 200 of the anode-side gas distributing plate assembly, causes a chemical reaction while passing through the cell structure 300, and is then discharged through the gas outlet (also referred to as fuel outlet) 221 located diagonally from the fuel inlet 211 in the anode-side gas distributing plate assembly. In addition, air is injected into the gas inlet 211' of the gas flow plate 200' of the cathode-side gas distributing plate assembly, is used for a chemical reaction while passing through the cell structure 300, and is then discharged through the gas outlet 221' located diagonally from the gas inlet 211' in the cathode-side gas distributing plate assembly.

FIG. 3 is a view showing the detailed configuration of the gas flow plate and the contact plate constituting the gas distributing plate assembly according to one embodiment of the present invention.

As described above, the anode-side gas distributing plate assembly and the cathode-side gas distributing plate assembly have the same technical configuration except for the positions of the gas inlets 211 and 211' and the gas outlets 221 and 221'. Therefore, redundant descriptions will be omitted, and the anode-side gas distributing plate assembly will be described in detail with reference to FIG. 3.

The gas distributing plate assembly includes the contact plate 100 and the gas flow plate 200.

The contact plate 100 includes the first side rim 110, the second side rim 120 and a body 130.

A plurality of gas passage holes 111 and 112 is formed in parallel in the first side rim 110 of the contact plate 100, and a plurality of gas passage holes 121 and 122 is also formed in parallel in the second side rim 120. In addition, an alignment hole H for passing an alignment shaft may be formed through at least one area among an area between the gas passage holes 111 and 112 and areas outside the gas passage holes 111 and 112.

If the gas distributing plate assembly illustrated in FIG. 3 is the anode-side gas distributing plate assembly, the above-described gas passage holes 111, 112, 121, and 122 will be specified as follows.

That is, a first fuel passage hole 111 and a first air passage hole 112 are formed in parallel in the first side rim 110 of the contact plate 100, a second fuel passage hole 121 is formed at a position diagonally opposite the first fuel passage hole 111 in the second side rim 120 of the contact plate 100, and a second air passage hole 122 is formed at a position diagonally opposite the first air passage hole 112 in the second side rim 120 of the contact plate 100.

A plurality of slits, which is parallel to each other, is formed in the body 130 of the contact plate 100 in a direction from the first side rim 110 toward the second side rim 120.

The non-reactive region 302 of the edge of the cell structure 300 is in close contact with at least a part of the body 130 of the contact plate 100. In addition, the gas flow plate 200 is in close contact with the other surface of the contact plate 100 opposite one surface of the contact plate 100 with which the cell structure 300 is in close contact.

The gas flow plate 200 includes a third side rim 210 having a shape corresponding to the first side rim 110 of the contact plate 100, a fourth side rim 220 having a shape corresponding to the second side rim 120 of the contact plate 100, and a body 230.

The gas inlet 211 and a gas passage hole 212 are formed in the third side rim 210 of the gas flow plate 200, and the gas outlet 221 and a gas passage hole 222 are formed in the fourth side rim 220. In addition, the gas inlet 211 and the gas outlet 221 are disposed to face each other diagonally.

When the gas distributing plate assembly illustrated in FIG. 3 is the anode-side gas distributing plate assembly, the gas inlet 211, the gas passage hole 212, the gas outlet 221, and the gas passage hole 222 will be specified as follows.

That is, the fuel inlet 211 and the gas passage hole, i.e., third air passage hole, 212 are formed at positions of the third side rim 210 of the gas flow plate 200 corresponding to the first fuel passage hole 111 and the first air passage hole 112 of the first side rim 110, and the fuel outlet 221 and the gas passage hole, i.e., fourth air passage hole, 222 are formed at positions of the fourth side rim 220 of the gas flow plate 200, corresponding to the second fuel passage hole 121 and the second air passage hole 122 of the second side rim 120.

An inflow channel 231, unit diffusion channels 232, and a discharge channel 233 are formed in the body 230 of the gas flow plate 200. The inflow channel 231, the unit diffusion channels 232, and the discharge channel 233 may be formed as structures that penetrate the gas flow plate 200, or may be formed as structures that are engraved on the gas flow plate 200 without penetrating the gas flow plate 200.

The inflow channel 231 is a comb-shaped channel that communicates with the gas inlet 211.

The unit diffusion channels 232 include horizontal channels 232-1 formed as horizontal grooves, and vertical grooves 232-2. A plurality of unit diffusion channels 232 may be disposed between the inflow channel 231 and the discharge channel 233, and in this case, the horizontal channels 232-1 and the vertical grooves 232-2 are alternately disposed without communicating with each other.

The discharge channel 233 is a comb-shaped channel that communicates with the gas outlet 221.

FIG. 4 is a view showing a detailed configuration for explaining the gas distribution principle of the gas distributing plate assembly according to the embodiment of FIG. 3.

As shown in FIGs. 3 and 4, in the body 130 of the contact plate 100, unit slits 131 formed as a plurality of slits may be provided in multiple stages.

Here, among the multi-stage unit slits 131, the height of unit slits 131 adjacent to the first side rim 110 and the second side rim 120 may be greater than the height of other unit slits 131 in the middle portion of the contact plate 100 that are not adjacent to the first side rim 110 and the second side rim 120.

In addition, referring again to FIG. 3, the unit diffusion channels 232 of the gas flow plate 200 may be disposed at positions corresponding to boundaries L1 between the unit slits 131 of the contact plate 100, and the horizontal channels 232-1 of the unit diffusion channels 232 of the gas flow plate 200 may be disposed at positions corresponding to horizontal lines L2 between the upper and lower ends of the unit slits 131.

The flows of fuel and air in each gas flow plate 200 or 200' when the contact plates 100 and 100' and the gas flow plates 200 and 200' having the above configurations are stacked to form the anode-side gas distributing plate assembly and the cathode-side gas distributing plate assembly will be described in detail as follows.

That is, as shown in FIG. 2, on the anode side, fuel is injected into the fuel inlet 211 of the gas flow plate 200 through the fuel passage hole provided in the seventh side rim of the separator 500.

In addition, as shown in FIG. 4, the fuel is introduced into the comb-shaped inflow channel 231 connected to the fuel inlet 111, and is then diffused in the x-axis direction (or left and right directions) along a horizontal long groove corresponding to a body of the comb-shaped inflow channel 231 and also diffused in the y-axis direction (or upward direction) between vertical grooves corresponding to teeth of the comb-shaped inflow channel 231. Here, the fuel is diffused in the x-axis and y-axis directions and, at the same time, passes through slits of the contact plate 100 in the z-axis direction and is introduced into the anode of the cell structure.

Next, referring to area A of FIG. 4, since the comb-shaped inflow channel 231 and the unit diffusion channels 232 do not communicate with each other, the fuel diffused in the y-axis direction is blocked at the ends of the comb teeth in the comb-shaped inflow channel 231 not to be diffused further, but instead, the fuel continues to be diffused upward by flowing over to the horizontal channel 232-1 of the unit diffusion channels 232 through the slits of the contact plate 100 disposed at the ends of the comb teeth.

Thereafter, diffusion in the x-axis direction (or leftward and rightward directions) occurs again in the horizontal channel 232-1 of the unit diffusion channels 232. At this time, since the horizontal channels 232-1 and the vertical grooves 232-2 of the unit diffusion channels 232 are configured not to communicate with each other, when the horizontal channel 232-1 is full of the fuel, the fuel continues to be diffused upward by flowing over to the vertical grooves 232-2 through the slits of the contact plate 100.

Such upward diffusion through the slits is possible because, as described above, the unit diffusion channels 232 of the gas flow plate 200 are disposed at positions corresponding to the boundaries L1 between the unit slits 131 of the contact plate 100, and the horizontal channels 232-1 of the unit diffusion channels 232 of the gas flow plate 200 are disposed at positions corresponding to the horizontal lines L2 between the upper and lower slit ends of the unit slits 131.

In addition, referring to area B of FIG. 4, when the fuel is diffused in the y-axis direction in the unit diffusion channel 232, the fuel is systematically guided by the plurality of vertical grooves 232-2 formed at regular intervals, and thus, the fuel gas may be prevented from being diffused while being concentrated in one area or deformed into an irregular shape.

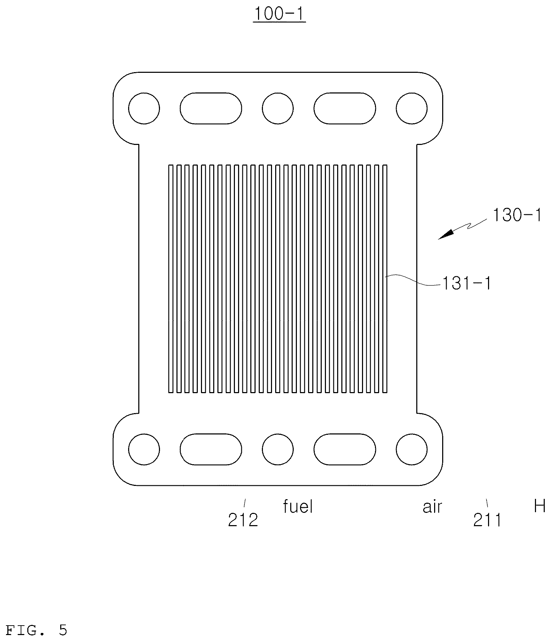

FIG. 5 is a view showing the configuration of a contact plate of a gas distributing plate assembly according to another embodiment of the present invention.

As shown in FIG. 5, a body 130-1 of a contact plate 100-1 of another embodiment may be provided with a plurality of long slits 131-1 integrally formed in parallel to each other to be connected from the upper end to the lower end of the body 130-1, rather than having a plurality of unit slits 131 provided in multiple stages as in the embodiment of FIG. 3 or FIG. 4.

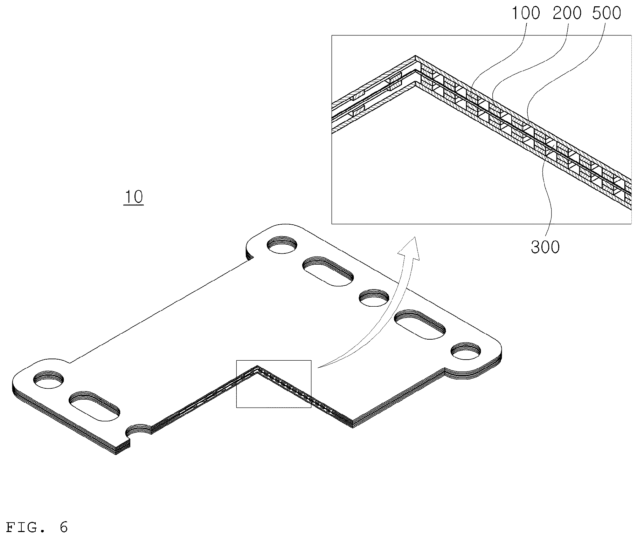

FIG. 6 is a cutaway view of the cell package according to one embodiment of the present invention in which all the components shown in FIG. 2 are combined.

As shown in FIG. 6, one cell package 10 is formed by sequentially and closely stacking the separator 500, the contact plate 100 and the gas flow plate 200 of the anode-side gas distributing plate assembly, the cell structure 300 and the sealant 400, the contact plate 100' and the gas flow plate 200' of the cathode-side gas distributing plate assembly, and the separator 500'.

Therefore, the shapes of the respective side rims of the separator 500, the contact plate 100 and the gas flow plate 200 of the anode-side gas distributing plate assembly, the cell structure 300 and the sealant 400, the contact plate 100' and the gas flow plate 200' of the cathode-side gas distributing plate assembly, and the separator 500', and the shapes of the alignment holes and the gas passage holes formed in the respective side rims are the same, and from the perspective of the cell package 10, three alignment holes and two gas passage holes are formed in the respective upper side rims, and three alignment holes and two gas passage holes are formed in the respective lower side rims.

In addition, when examining the cross-section of the cell package 10, it may be confirmed that gas channels having mirrored shapes are formed in upper and lower surfaces of the cell package 10 with respect to the cell structure 300 disposed in the middle of the cell package 10, and in this sense, each of the anode-side gas distributing plate assembly and the cathode-side gas distributing plate assembly in the present invention may be regarded as a bipolar plate.

As is apparent from the above description, according to one embodiment of the present invention, fuel and air are prevented from being concentrated in a specific area of a cell structure, and a uniform reaction occurs, thereby being capable of reducing heat loss in a cell, a separator, and a stack due to heat concentration, and increasing electricity production efficiency.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A gas distributing plate assembly for fuel cells or electrolyzers comprising:
a contact plate having a plurality of gas passage holes formed in each of a first side rim and a second side rim, and a plurality of slits formed parallel to each other in a direction from the first side rim to the second side rim in a body, and configured such that an edge of a cell structure is in close contact with at least a portion of the body; and
a gas flow plate configured to be in close contact with a surface of the contact plate opposite the other surface configured such that the cell structure is in close contact therewith, and having a gas inlet and a gas passage hole formed in a third side rim having a shape corresponding to the first side rim, a gas outlet and a gas passage hole formed in a fourth side rim having a shape corresponding to the second side rim, and a comb-shaped inflow channel configured to communicate with the gas inlet, unit diffusion channels comprising horizontal channels formed as horizontal grooves and vertical grooves, and a comb-shaped discharge channel configured to communicate with the gas outlet, the inflow channel, the unit diffusion channels, and the discharge channel being formed in a body.

2. The gas distributing plate assembly according to claim 1, wherein the body of the contact plate is provided with unit slits formed as a plurality of slits and provided in multiple stages.

3. The gas distributing plate assembly according to claim 2, wherein, among the plurality of unit slits, a height of unit slits adjacent to the first side rim and the second side rim is greater than a height of other unit slits not adjacent to the first side rim and the second side rim.

4. The gas distributing plate assembly according to claim 2, wherein the unit diffusion channels of the gas flow plate are disposed at positions corresponding to boundaries between the unit slits of the contact plate, and the horizontal channels of the unit diffusion channels of the gas flow plate are disposed at positions corresponding to horizontal lines between upper and lower ends of the unit slits.

5. The gas distributing plate assembly according to claim 1, wherein the horizontal channels and the vertical grooves of the unit diffusion channels of the gas flow plate are alternately disposed without communicating with each other.

6. The gas distributing plate assembly according to claim 1, wherein, when the gas distributing plate assembly is used as a cathode-side gas distributing plate assembly, a first fuel passage hole and a first air passage hole are formed in the first side rim of the contact plate, a second fuel passage hole is formed at a position diagonally opposite the first fuel passage hole in the second side rim of the contact plate, and a second air passage hole is formed at a position diagonally opposite the first air passage hole in the second side rim of the contact plate; and
a fuel inlet and a third air passage hole are formed at positions corresponding to the first fuel passage hole and the first air passage hole in the third side rim of the gas flow plate, and a fuel outlet and a fourth air passage hole are formed at positions corresponding to the second fuel passage hole and the second air passage hole in the fourth side rim of the gas flow plate.

7. A cell stack of a fuel cell or an electrolyzer configured such that a plurality of cell packages is stacked, each of the plurality of cell packages comprising:
the gas distributing plate assembly according to claim 1 provided on an anode side;
the gas distributing plate assembly according to claim 1 provided on a cathode side;
a cell structure having an anode in close contact with the anode-side gas distributing plate assembly and a cathode in close contact with the cathode-side gas distributing plate assembly;
a sealant disposed between the anode-side gas distributing plate assembly and the cathode-side gas distributing plate assembly to prevent gas leakage; and
a separator configured to seal an exposed outer surface of the gas flow plate provided in the anode-side gas distributing plate assembly or the cathode-side gas distributing plate assembly.

8. The cell stack according to claim 7, wherein the body of the contact plate is provided with unit slits formed as a plurality of slits and provided in multiple stages.

9. The cell stack according to claim 8, wherein, among the plurality of unit slits, a height of unit slits adjacent to the first side rim and the second side rim is greater than a height of other unit slits not adjacent to the first side rim and the second side rim.

10. The cell stack according to claim 8, wherein the unit diffusion channels of the gas flow plate are disposed at positions corresponding to boundaries between the unit slits of the contact plate, and the horizontal channels of the unit diffusion channels of the gas flow plate are disposed at positions corresponding to horizontal lines between upper and lower ends of the unit slits.

11. The cell stack according to claim 7, wherein the horizontal channels and the vertical grooves of the unit diffusion channels of the gas flow plate are alternately disposed without communicating with each other.

12. The cell stack according to claim 7, wherein, in the anode-side gas distributing plate assembly, a first fuel passage hole and a first air passage hole are formed in the first side rim of the contact plate, a second fuel passage hole is formed at a position diagonally opposite the first fuel passage hole in the second side rim of the contact plate, and a second air passage hole is formed at a position diagonally opposite the first air passage hole in the second side rim of the contact plate; and
a fuel inlet and a third air passage hole are formed at positions corresponding to the first fuel passage hole and the first air passage hole in the third side rim of the gas flow plate, and a fuel outlet and a fourth air passage hole are formed at positions corresponding to the second fuel passage hole and the second air passage hole in the fourth side rim of the gas flow plate.

13. The cell stack according to claim 7, wherein fuel gas is injected into the fuel inlet of the anode-side gas distributing plate assembly and is then discharged through the fuel outlet located diagonally from the fuel inlet in the anode-side gas distributing plate assembly, and air is injected into the gas inlet of the cathode-side gas distributing plate assembly and is then discharged through the gas outlet located diagonally from the gas inlet in the cathode-side gas distributing plate assembly.

14. A fuel cell system comprising the cell stack according to claim 7.
